# EUROPEAN PATENT APPLICATION

(11) **EP 4 576 733 A1**
(43) Date of publication of application: **25.06.2025**
(21) Application number: 23219068.6
(22) Date of filing: 21.12.2023
(51) Int. Cl.: H04L 61/5014

(54) **DYNAMICALLY ASSIGNING AN IP ADDRESS TO AN OPERATIONAL TECHNOLOGY DEVICE IN A WIND TURBINE GENERATOR**

(71) Applicant: VESTAS WIND SYSTEMS A/S, 8200 Aarhus N (DK)
(72) Inventor: Freksen, Michael, 8800 Viborg (DK); Schumacher, Steffen, 8870 Langå (DK); Knudsen, Henrik Althof, 8410 Rønde (DK); Fur, Lars Nygaard, 8600 Silkeborg (DK)
(74) Representative: Vestas Patents Department

(57) **Abstract**

The invention relates to a method and a system for dynamically assigning an IP address to an operational technology (OT) device within a wind turbine generator (WTG) to establish a connection between the OT device (21) and a local windfarm network (25) through a network switch (23), the wind turbine generator (10) comprises a wind turbine ID, and the network switch (23) comprises a switch ID and a plurality of ports (22), each port comprises a port ID.

When a network switch (23) detects a connection between an OT device and one of the ports in a network switch, the network switch (23) is establishing communication with a central server (30), transmitting identification information comprising the port ID, for the port connected to the OT device (21), and the switch ID to the central server (30), the central server (30) assigns, upon receiving said identification information, an IP address for the port ID and switch ID. The central server returns the IP address to the OT device (21), and the OT device (21) establishes communication between the OT device and the local windfarm network (25) using the returned IP address.

## Description

### FIELD OF THE INVENTION

The present invention relates to a method and a system for dynamically assigning an IP address to an operational technology (OT) device in a wind turbine generator (WTG).

### BACKGROUND OF THE INVENTION

The present invention relates generally to the field of wind energy generation, and more specifically to the management and configuration of local networks within windfarms.

Windfarms, which comprises multiple wind turbines, are a crucial part of renewable energy infrastructure. Each wind turbine in a windfarm is typically equipped with numerous devices that monitor and control various aspects of the wind turbine's operation. These devices need to be interconnected in a local network for efficient communication and control.

Traditionally, setting up and configuring such a local network in a windfarm has been a manual and time-consuming process. Each device connected to the network needs to be assigned an Internet Protocol (IP) address, and this IP address needs to be related to a specific wind turbine in the windfarm. This process involves manually receiving a Media Access Control (MAC) address from each device and relating the assigned IP address of the device to a specific wind turbine identified by the MAC address.

Alternatively, methods are known to automatically obtain an IP address by transmitting an identifier ID, for instance the MAC address, from the device to a central server, which then returns the IP address, but still it requires the central server knows the identifier ID for the device and that an IP address is assigned to the identifier ID.

However, this known methods has several drawbacks. Manual configuration can lead to errors, and it is not scalable for large windfarms with many devices.

Furthermore, if a device is replaced or a new device is added, the network configuration needs to be updated, which requires additional manual work.

Hence, an improved method for configuring a local network in a windfarm would be advantageous, and in particular a more efficient and/or reliable method and system would be advantageous.

### OBJECT OF THE INVENTION

It is an object of the present invention to provide an improved method for configuring a local network in a windfarm.

It is a further object of the present invention to provide an alternative to the prior art.

In particular, it may be seen as an object of the present invention to provide an automatic method for configuring a local network in a windfarm that solves the above-mentioned problems of the prior art with using a MAC address to assign an IP address.

### SUMMARY OF THE INVENTION

Thus, the above described object and several other objects are intended to be obtained in a first aspect of the invention by providing a method for dynamically assigning an IP address to an operational technology (OT) device within a wind turbine generator (WTG) to establish a connection between the OT device and a local windfarm network through a network switch, the wind turbine generator comprises a wind turbine ID, and the network switch comprises a switch ID and a plurality of ports, each port comprises a port ID,
wherein the method comprises the following steps:
- the network switch detecting a connection between the OT device and one of the plurality of ports in the network switch,
- upon detection of this connection, the network switch is establishing communication with a central server, transmitting identification information, comprising the port ID for the port connected to the OT device and the switch ID, to the central server,
- the central server comprises an assignment algorithm, which is assigning, upon receiving said identification information, an IP address to the OT device based on the identification information,
- the central server returning the IP address to the OT device, and
- wherein communication between the OT device and the local windfarm network is established using the returned IP address.

The invention pertains to a method for dynamically assigning an Internet Protocol (IP) address to an Operational Technology (OT) device within a wind turbine Generator (WTG). This method facilitates the establishment of a connection between the OT device and a local windfarm network via a network switch.

The WTG is characterized by comprising a unique wind turbine ID, while the network switch comprises a switch ID and multiple ports, each with a distinct Port ID. The wind turbine ID may be part of the switch ID.

The method involves that the network switch detects a connection between the OT device and one of its ports. The detection of the connection occurs by that the network switch receives a DHCP discover package on one of its ports. The packet is then relayed to a central server, embedding the port ID of the connected port and the switch ID. Upon detecting this connection, the network switch establishes communication with a central server, transmitting identification information that includes the port ID of the connected port and the switch ID.

The central server, comprising an assignment algorithm, assigns an IP address to the OT device based on the received identification information.

The central server then returns the assigned IP address to the OT device via the network switch. Finally, the OT device, via the network switch, establishes communication between the OT device and the local windfarm network using the returned IP address.

This invention provides a dynamic and efficient way to manage network connections within a windfarm, enhancing the overall operational efficiency and reliability of the windfarm network.

The advantage of the method is that an IP address may be assigned automatically to an OT device being connected to a network switch by using the switch ID and the port ID. The MAC address of the OT device or any other identifier ID may not be required to assign the IP address. This gives a reliable method to assign the IP address to an OT device. A further advantage is ease of commissioning and replacement of OT devices by defining a generic IP address scheme based on physical network topology using the switch ID and the port ID opposed to using the specific OT device information such as the MAC address.

Further checks of the identity of the OT device may be performed based on MAC address, hostname, vendor class and possible further parameters may be performed subsequently.

According to an embodiment, the central server comprises a Dynamic Host Configuration Protocol (DHCP) server.

A Dynamic Host Configuration Protocol (DHCP) server is a network server that automatically provides and assigns IP addresses, default gateways, and other network parameters to client devices. The DHCP server assigns dynamic IP addresses to devices connected to the network.

The central server may be based on a DHCP server, where to further functionality may be added. Specifically, an assignment algorithm may be added to assign an IP address to the OT device. Therefore, the central server comprises an DHCP server and the functionality of the DHCP server, but additional functions may be added to the central server.

According to an embodiment, the turbine ID is derivable from the switch ID.

A number of switch IDs may be reserved for each wind turbine. For instance, there may be reserved two switch IDs for each wind turbine. A network switch may e.g. comprise 48 ports, so with two switches reserved there may be 96 ports available on each wind turbine.

The turbine ID may be derivable from the switch ID. Certain switch IDs may be assigned to a certain wind turbine. In the case where two network switches are reserved for each turbine, the switch ID may be defined to be the turbine ID * 2 and the turbine ID * 2 - 1. Thereby the turbine ID may be derivable from the switch ID.

According to an embodiment, assigning an IP address for the OT device based on the identification information involves determining an octet in the IP address based on the turbine ID and determining another octet in the IP address based on the switch ID and the port ID.

An Internet Protocol address, or IP address, is a numerical label assigned to each device participating in the network. An IP address may comprise four octets. The first and the second may be fixed numbers used for the entire local windfarm network. The third and fourth octet may be determined based on the switch ID and the port ID.

An IP address typically may be divided into four octets. The turbine ID may be derived from the switch ID. For example, the third octet in the IP address in a preferred embodiment may be the turbine ID, and the fourth octet may be based on the switch ID and the port ID.

For instance, if there are ten ports designated for hydraulic sensors with port ID 0-9 in a network switch, and in the fourth octet the numbers 45-54 are designated for the hydraulic sensors for the given network switch, then the fourth octet may be determined as port ID + 45. Thereby there is a one-to-one mapping of port IDs to the fourth octet number.

That means that the network switch covering each section will have a pre-defined mapping of which exact OT device connects to which exact port in the network switch, therefore it is possible to make a mathematical presentation of the binding between the turbine number, the network switch, and the port mapping for each WTG mark version.

According to an embodiment, assigning an IP address for the OT device based on the identification information involves comparing the switch ID and the port ID to a list, wherein the list designates a specific IP address to a specific switch ID and port ID.

This is an alternative embodiment, where the IP address may be determined by looking up in a table for the specific switch ID and port ID to assign the IP address. The table will then be predefined with IP addresses assigned for each port to which OT devices may be connected.

According to an embodiment, there is a one-to-one relation between the identification information and the IP address.

The identification information comprises the switch ID and the port ID which the OT device is connected to. The assignment of the IP address may be done so the IP address always will be unique, so two different ports in the wind park network will not be assigned the same IP address. Each network switch in the wind park comprises a unique switch ID, and as the switch ID may be derivable from the assigned IP address, the IP address will be unique. The switch ID includes the turbine ID, thereby the turbine ID will also be derivable from the IP address.

According to an embodiment, the central server is transmitting a warning signal, if the IP address cannot be assigned based on the specific switch ID and port ID received by the central server.

If it may not be possible to assign an IP address to the OT device connected to a specific port in a specific network switch, then a warning signal may be transmitted. The warning signal may be transmitted to the OT device or the network switch or another device in the wind turbine. The device receiving the warning may then send a signal for instance to a service technician installing the OT device, it could be a sound signal, a light signal, or a message on a display indication to an that an IP address cannot be assigned.

According to an embodiment, the method further comprises:
- transmitting the MAC address from the OT device to the central server, and
- validating the identity of the OT device by checking that the MAC address or an identification part of the MAC address is on an approved list for the port and network switch to which the OT device is connected.

The MAC address may indicate the identity of the OT device connected to the port in the network switch, and the validation may show that OT device is not the OT device designated for the specific port on the specific switch. Thereby the validation fails, and a warning or error message may be submitted to the OT device, the network switch, or another device in the wind turbine.

Validating the identity of the OT device for the port and network switch may be based on the port ID and the switch ID.

A MAC (Media Access Control) address is a unique identifier assigned to a network interface controller (NIC) for use as a network address in communications within a network segment. This use is common in most IEEE 802 networking technologies, including Ethernet, Wi-Fi, and Bluetooth. A MAC address is a unique number that all wireless, electronic devices have.

An Organizationally Unique Identifier (OUI) is a 24-bit number that uniquely identifies a vendor, manufacturer, or other organization. This identifier is used in various networking technologies, including Ethernet and Wi-Fi, as the first 24 bits of the Media Access Control (MAC) address to uniquely identify the manufacturer of the device.

According to an embodiment, the method further comprises:
transmitting a verification signal when the identity of the OT device has been validated, or transmitting a warning signal if the identity of the OT device has not been validated.

OT devices using DHCP may emit a DHCP Discover message which includes a series of information. This information may include the MAC address of the OT device, and may also include, client identifier (option 61 in the DHCP protocol), hostname (Option 12 in the DHCP protocol), and/or vendor class (Option 60 in the DHCP protocol).

This enables defining a number of checks or validations for each class of devices, some of which are listed below:
- The MAC address for a device is within the list of MAC OUI/IAB/CID/EUIs provided by the vendor of the OT device.
- The client identifier matches a regular expression pattern, provided by the vendor of the OT device.
- The hostname matches a regular expression pattern, provided by the vendor of the OT device.
- The vendor class equalling the vendor information provided by the vendor of the OT device.

This level of validation including client identifier, hostname and vendor class is an improvement compared to solely matching a specific device MAC address, as MAC addresses can easily be modified to mimic an existing device once an attacker, who want to hack the system, has gained physical access to the system.

When the correct address has been assigned to the OT device in the wind turbine, a service technician, installing the device, may furthermore receive a visual and/or audible verification of a successful completion to avoid manual verification procedures. This validation will be initiated from the central server as an additional functionality towards a device in the wind turbine that can provide the audio/visual output to the technician, this device can be the network switch itself, the OT device, an additional device already implemented in the wind turbine, or a computer or mobile phone carried by the service technician. Further, the output, validation signal, warning, or error message, may be transmitted to a central computer in the wind park, where an operator may receive the message and may act on it.

According to an embodiment, the OT device comprises a device type and an MAC address, and the method further comprises:
- transmitting the MAC address from the OT device to the central server, and
- validating that the device type of the OT device according to the MAC address is for the port and network switch to which the OT device is connected.

Validating the device type of the OT device according to the MAC address for the port and network switch is based on the port ID and the switch ID.

Each port in the network switches may be designated for a specific type of OT device. The MAC address may indicate the type of the OT device connected to the port, and the validation may show that OT device may not be of a type designated for the specific port on the specific network switch. Thereby the validation fails, and a warning or error message may be submitted to the network switch, the OT device or to another device in the wind turbine.

According to an embodiment, the method further comprises:
- transmitting a verification signal when the device type has been validated.

According to an embodiment, the OT device comprises a hostname, and the method further comprises:
- transmitting the hostname from the OT device to the central server, and
- validating the identity of the OT device by checking that the hostname is on the approved list for the port and network switch to which the OT device is connected.

The OT device may comprise a hostname, which is option 12 in the PHCP protocol. Further validation may be performed by transmitting the hostname to the central server, which then checks that the hostname is the name registered on an approved list.

Validating the identity of the OT device by checking that the hostname may be on the approved list for the port and network switch is based on the port ID and the switch ID.

According to an embodiment, the method further comprises:
transmitting a verification signal when the hostname has been validated.

When the hostname is validated a verification signal may be returned, otherwise if not validated a warning or error message may be transmitted.

According to an embodiment, the method further comprises:
- transmitting the vendor class from the OT device to the central server, and
- validating a vendor by comparing the vendor class to an approved vendor class for the port and network switch to which the OT device is connected.

Validating the vendor by comparing the vendor class to an approved vendor class for the port and network switch is based on the port ID and the switch ID.

The OT device may comprise a vendor class, which is option 60 in the PHCP protocol. Further validation may be performed by transmitting the vendor class to the central server, which then checks that the vendor class is registered as an approved vendor class for the specific switch ID and port ID.

According to an embodiment, the method further comprises:
transmitting a verification signal when the vendor class has been validated.

When the vendor class is validated a verification signal may be returned, otherwise if not validated a warning or error message may be transmitted.

According to an embodiment, the OT device is a sensor, a controller, an actuator, a motor, a drive, or any network connected asset with an IP address.

In a second aspect, the invention relates to a system comprising a windfarm network, a central server, a wind turbine generator (WTG), the wind turbine generator comprises a network switch having a plurality of ports and an operational technology (OT) device connected to one of the ports of the network switch, the wind turbine generator further comprises a wind turbine ID, and the network switch comprises a switch ID and each port comprises a port ID, wherein the OT device establishes connection with the wind farm network by using a dynamically assigned IP address,
wherein the IP address is dynamically assigned to the OT device by that
- the network switch is arranged to detect a connection between the OT device and one of the plurality of ports in the network switch,
- upon detection of this connection, the network switch is configured to establish communication with a central server, to transmit identification information, comprising the port ID for the port connected to the OT device and the switch ID, to the central server,
- the central server comprises an assignment algorithm, which is arranged to assign, upon receiving said identification information, an IP address to the OT device based on the identification information,
- the central server is arranged to return the IP address to the OT device.

The advantage of the system is that an IP address may be assigned automatically to an OT device being connected to a network switch by using the switch ID and the port ID. This provides a dynamic and efficient way to manage network connections within a windfarm, enhancing the overall operational efficiency and reliability of the windfarm network.

The individual aspects of the present invention may each be combined with any of the other aspects. These and other aspects of the invention will be apparent from the following description with reference to the described embodiments.

### BRIEF DESCRIPTION OF THE FIGURES

The method and system according to the invention will now be described in more detail with regard to the accompanying figures. The figures show one way of implementing the present invention and is not to be construed as being limiting to other possible embodiments falling within the scope of the attached claim set.
Fig. 1 illustrates a wind turbine,
Fig. 2 the wind turbines comprising OT devices in the local wind turbine network.
Fig. 3 shows a flowchart illustrating the method of the invention.

### DETAILED DESCRIPTION OF THE INVENTION

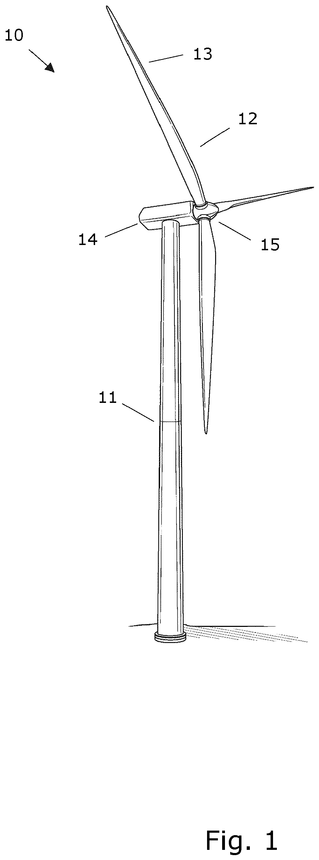

Fig. 1 shows a wind turbine generator 10 comprising a tower 11 and a rotor 12 with at least one rotor blade 13. Typically, three blades are used, but a different number of blades can also be used. The blades 13 are connected with the hub 15, which is arranged to rotate with the blades. The rotor is connected to a nacelle 14, which is mounted on top of the tower 11 and being adapted to drive a generator situated inside the nacelle 14 via a drive train. The rotor 12 is rotatable by action of the wind.

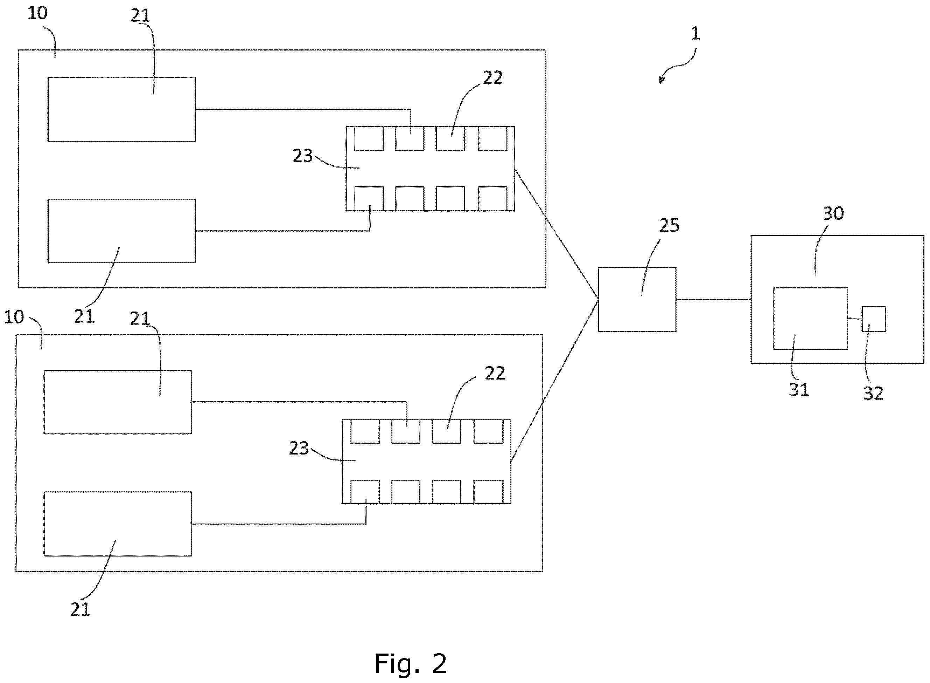

Fig. 2 illustrates the wind turbines 10 comprising OT devices 21 in a wind turbine farm 1. Two OT devices are shown in each wind turbine 10 in Fig. 2, but there may by many OT devices in each wind turbine. The OT devices 21 are connected to a port 22 in a network switch 23, and the network switch is connected to the local windfarm network 25. The central server 30 is also connected to the local windfarm network 25. The network switch 23 may communicate with the central server 30 through the local windfarm network 25, and the OT devices may communicate with the local windfarm network 25 through the network switch 23.

The central server 30 comprises a Dynamic Host Configuration Protocol (DHCP) server 31. Additional functionality may be added to the DHCP server, the assignment algorithm 32 is added functionality. The assignment algorithm 32 is assigning, upon receiving identification information, an IP address to the OT device 21 based on the identification information. The identification information, comprises the port ID, for the port connected to the OT device, and the switch ID.

Fig. 2 shows eight ports in each network switch, but there may be any number of ports in a network switch, in a typically used network switch there may be 48 ports. Further, fig. 2 shows one network switch in each wind turbine, but there may be more than one network switch in each turbine, in a typical installation where may be two network switches in each wind turbine.

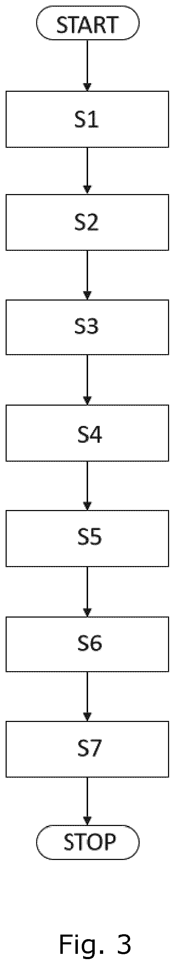

Fig. 3 is a flow chart illustrating the method of the invention. This flowchart represents the dynamic assignment of an IP address to an OT device within a wind turbine generator (WTG) to establish a connection between the OT device and a local windfarm network through a network switch. The process involves detection of a connection, communication establishment, transmission of identification information, IP address assignment, and finally, connection establishment.

In step S1 the network switch detects a connection between the OT device and one of its ports. In step S2 the network switch establishes communication with a central server. In step S3 the network switch transmits identification information (port ID and switch ID) to the central server. In step S4 the central server receives the identification information. In step S5 the central server assigns, applying the assignment algorithm, an IP address to the OT device for the port ID and switch ID based on the received identification information. In step S6 the central server returns the assigned IP address to the OT device. And in step S7 the OT device establishes communication between the OT device and the local windfarm network using the returned IP address.

There are two scenarios discussed below. In the first scenario the system is starting up for the first time and during start up each OT device in the system will be assigned an IP address. In the second scenario an OT device is being replaced and the new OT device takes over the position of the old OT device and is assigned the same IP address as the old OT device was assigned.

### Use case scenario 1: Commissioning

Commissioning of OT devices in the WTG. It is assumed that the network switches in the WTG have been automatically configured and that there is network access to central components in the Wind Power Plant. A central DHCP server in the Wind Power Plant is able to assign IP addresses based on the switch ID and physical port ID coming from the before mentioned network switches. The IP address shall be unique in a reserved network segment for the OT device based on its function in the WTG.

When the OT device is powered up, either automatically as part of the commissioning or via an operator's manual installation of the device in a later stage, it will contact the central DHCP server as per the standard protocol and will assume a IP address based on switch ID and port ID. It is assumed that the OT device will be configured for DHCP operation as per manufacturers build instructions.

### Use case scenario 2: Replacement

Replacement of OT devices in WTG. When an OT device needs to be replaced in the WTG, normal DHCP implementations require IP address leases to expire before the address can be issued to a replacement device. The solution of the invention makes sure that the DHCP server flushes the current lease and assign the same IP address when receiving a request from a replaced OT device based on the switch ID and the port ID from the network switch forwarding the request. For Cyber Security purposes a validation procedure should be built into the solution ensuring the replacement of the OT device is pre-liminary approved, validating either on MAC OUI or hostname.

The invention can be implemented by means of hardware, software, firmware, or any combination of these. The invention or some of the features thereof can also be implemented as software running on one or more data processors and/or digital signal processors.

The individual elements of an embodiment of the invention may be physically, functionally, and logically implemented in any suitable way such as in a single unit, in a plurality of units or as part of separate functional units. The invention may be implemented in a single unit or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for dynamically assigning an IP address to an operational technology (OT) device within a wind turbine generator (WTG) to establish a connection between the OT device (21) and a local windfarm network (25) through a network switch (23), the wind turbine generator (10) comprises a wind turbine ID, and the network switch (23) comprises a switch ID and a plurality of ports (22), each port comprises a port ID, wherein the method comprises the following steps:
- the network switch (23) detecting a connection between the OT device (21) and one of the plurality of ports (22) in the network switch,
- upon detection of this connection, the network switch (23) is establishing communication with a central server (30), transmitting identification information, comprising the port ID, for the port connected to the OT device (21) and the switch ID, to the central server (30),
- the central server (30) comprises an assignment algorithm (32), which is assigning, upon receiving said identification information, an IP address to the OT device (21) based on the identification information,
- the central server (30) returning the IP address to the OT device (21), and
- wherein communication between the OT device and the local windfarm network (25) is established using the returned IP address.

2. The method according to claim 1, wherein the central server (30) comprises a Dynamic Host Configuration Protocol (DHCP) server (31).

3. The method according to claim 1 or 2, wherein the turbine ID is derivable from the switch ID.

4. The method according to any of the preceding claims, wherein assigning an IP address for the OT device (21) based on the identification information involves determining an octet in the IP address based on the turbine ID and determining another octet in the IP address based on the switch ID and the port ID.

5. The method according to any of the claims 1-3, wherein assigning an IP address for the OT device (21) based on the identification information involves comparing the switch ID and the port ID to a list, wherein the list designates a specific IP address to a specific switch ID and port ID.

6. The method according to any of the preceding claims, wherein there is a one-to-one relation between the identification information and the IP address.

7. The method according to any of the preceding claims, wherein the central server (30) is transmitting a warning signal, if the IP address cannot be assigned based on the specific switch ID and port ID received by the central server.

8. The method according to any of the any of the preceding claims, wherein the method further comprises:
- transmitting the MAC address from the OT device (21) to the central server (30), and
- validating the identity of the OT device (21) by checking that the MAC address or an identification part of the MAC address is on an approved list for the port (22) and network switch (23) to which the OT device (21) is connected.

9. The method according to claim 8, wherein the method further comprises:
- transmitting a verification signal when the identity of the OT device (21) has been validated, or transmitting a warning signal if the identity of the OT device has not been validated.

10. The method according to any of the preceding claims, wherein the OT device (21) comprises a device type and a MAC address, and the method further comprises:
- transmitting the MAC address from the OT device (21) to the central server (30), and
- validating that the device type of the OT device (21) according to the MAC address for the port (22) and network switch (23) to which the OT device (21) is connected.

11. The method according to claim 10, wherein the method further comprises:
- transmitting a verification signal when the device type has been validated.

12. The method according to any of the preceding claims, wherein the OT device (21) comprises a hostname, and the method further comprises:
- transmitting the hostname from the OT device (21) to the central server (30), and
- validating the identity of the OT device (21) by checking that the hostname is on the approved list for the port (22) and network switch (23) to which the OT device (21) is connected.

13. The method according to claim 12, wherein the method further comprises: transmitting a verification signal when the hostname has been validated.

14. The method according any of the preceding claims, wherein the method further comprises:
- transmitting the vendor class from the OT device (21) to the central server (30), and
- validating a vendor by comparing the vendor class to an approved vendor class for the port (22) and network switch (23) to which the OT device (21) is connected.

15. The method according to claim 14, wherein the method further comprises: transmitting a verification signal when the vendor class has been validated.

16. A system comprising a windfarm network (25), a central server (30), a wind turbine generator (WTG) (10), the wind turbine generator (10) comprises a network switch (23) having a plurality of ports (22) and an operational technology (OT) device (21) connected to one of the ports (22) of the network switch (23), the wind turbine generator (10) further comprises a wind turbine ID, and the network switch (23) comprises a switch ID and each port comprises a port ID, wherein the OT device (21) establishes connection with the wind farm network (25) by using a dynamically assigned IP address,
wherein the IP address is dynamically assigned to the OT device (21) by that
- the network switch (23) is arranged to detect a connection between the OT device (21) and one of the plurality of ports (22) in the network switch,
- upon detection of this connection, the network switch (23) is configured to establish communication with a central server (30), to transmit identification information, comprising the port ID for the port (22) connected to the OT device and the switch ID, to the central server (30),
- the central server (30) comprises an assignment algorithm (32), which is arranged to assign, upon receiving said identification information, an IP address to the OT device (21) based on the identification information,
- the central server (30) is arranged to return the IP address to the OT device (21).
